# FASCICULE DE BREVET EUROPEEN

(11) **EP 3 146 218 B1**
(45) Date de publication et mention de la délivrance du brevet: **10.10.2018**
(21) Numéro de dépôt: 15725837.7
(22) Date de dépôt: 07.05.2015
(51) Int. Cl.: F16C 11/06, F16C 23/04, B64D 27/26, F16C 11/04

(54) **DISPOSITIF D'ARTICULATION À ROTULE POUR UNE TURBOMACHINE**
KUGELGELENKVORRICHTUNG FÜR EINE TURBOMASCHINE
BALL-JOINT DEVICE FOR TURBOMACHINE

(30) Priorité: 21.05.2014 FR 1454559
(43) Date de publication de la demande: 29.03.2017
(73) Titulaire: SAFRAN AIRCRAFT ENGINES, 75015 Paris (FR)
(72) Inventeur: FLORENT, Nicolas Marc, 77550 Moissy-Cramayel Cedex (FR); TESNIERE, Marc Patrick, 77550 Moissy-Cramayel Cedex (FR)
(74) Mandataire: Gevers & Orès
(86) Numéro de dépôt international: PCT/FR2015/051222
(87) Numéro de publication internationale: WO 2015/177431

(56) Documents cités:
- EP-A1- 0 357 504
- FR-A1- 2 887 853
- JP-A- 2003 205 251
- JP-U- H0 249 797

## Description

### DOMAINE TECHNIQUE

La présente invention concerne un dispositif d'articulation à rotule pour la suspension d'une turbomachine à un pylône ou la suspension d'un équipement au corps d'une turbomachine.

### ETAT DE L'ART

L'état de l'art comprend notamment les documents FR-A1-2 887 853, EP-A1- 0 357 504, JP-A-2003 205251 et JP H02 49797.

Une turbomachine est en général suspendue à un pylône par l'intermédiaire d'un « yoke » qui est fixé sur le corps de la turbomachine, au niveau de son carter intermédiaire. Ce yoke comprend des chapes sur lesquelles sont articulées des extrémités de bielles dont les autres extrémités sont reliées à des moyens de suspension de la turbomachine au pylône. Chaque bielle est en général articulée sur une chape par un dispositif d'articulation à rotule.

Dans la technique actuelle, chaque bielle a une extrémité qui porte une rotule et qui est intercalée entre les deux oreilles d'une chape, la rotule comportant un alésage de passage d'un axe dont les extrémités traversent des orifices des oreilles de la chape.

Les dispositifs de ce type actuellement utilisés ne sont toutefois pas entièrement satisfaisants d'un point de vue de la sécurité. Un critère important de sécurité est que la liaison d'une bielle à une chape soit maintenue en particulier en cas de rupture de l'axe traversant la rotule portée par la bielle.

Dans chacune des demandes FR-A1-2 879 695 FR-A1-2 923 460 par exemple, en cas de rupture de l'axe, les parties rompues de l'axe peuvent sortir des orifices des oreilles, ce qui se traduirait par une rupture de la liaison de la bielle à la chape.

La présente invention a notamment pour but d'apporter une solution simple, efficace et économique à ce problème.

### EXPOSE DE L'INVENTION

L'invention propose un dispositif d'articulation à rotule pour la suspension d'une turbomachine à un pylône ou la suspension d'un équipement au corps d'une turbomachine, selon la revendication 1, comprenant un premier organe dont une extrémité porte une rotule et est intercalée entre les deux oreilles d'un second organe, la rotule comportant un alésage de passage d'un axe dont les extrémités traversent des orifices des oreilles, une première des oreilles comprenant ou portant des premiers moyens de retenue axiale de l'axe du côté opposé à la rotule, et une seconde des oreilles comprenant ou portant des seconds moyens de retenue axiale de l'axe du côté opposé à la rotule, caractérisé en ce que les premiers moyens de retenue axiale comprennent un couvercle fixé à la première oreille et qui recouvre au moins en partie une première extrémité de l'axe ou est formé d'une seule pièce avec la première extrémité de l'axe, et en ce que le dispositif comprend en outre un organe élastique déformable en compression qui est maintenu par le couvercle, ledit organe élastique étant configuré pour solliciter axialement dans une direction opposée au couvercle un élément d'appui traversé par l'axe, positionné entre le couvercle et la rotule, et en appui axial sur la rotule.

Le dispositif selon l'invention est donc équipé de moyens permettant d'assurer une retenue axiale de l'axe de façon à ce que celui-ci de se dissocie pas des oreilles. Ainsi, même en cas de rupture de l'axe, ces parties rompues sont maintenues et ne se délogent pas des orifices des oreilles, ce qui permet de conserver la liaison des premier et second organes.

Par ailleurs, l'organe élastique, qui sollicite axialement la rotule du coté opposé au couvercle, permet une fois le montage réalisé de supprimer un jeu axial entre la rotule et deux éléments de maintien, par exemple sous la forme de douilles, disposés axialement de part et d'autre de la rotule et servant à immobiliser axialement la rotule sur l'axe. Un tel jeu axial est généralement nécessaire au montage de la rotule, car avant le montage de l'axe, la rotule doit être positionnée entre les deux oreilles du second organe, une fois que les éléments de maintien ont été également positionnés en les amenant dans l'espace intérieur s'étendant entre les deux oreilles. Ce jeu est néfaste en fonctionnement car il peut favoriser des déplacements axiaux inutiles de la rotule et une usure accélérée de celle-ci, de l'axe, voire aussi des deux éléments de maintien. Autrement dit, l'organe élastique assure en fonctionnement la suppression du jeu axial de montage de la rotule.

Le dispositif selon l'invention peut comprendre une ou plusieurs des caractéristiques suivantes, prises isolément les unes des autres ou en combinaison les unes avec les autres :
- les seconds moyens de retenue axiale comprennent un élément de retenue disposé du côté de la seconde oreille opposé à la rotule, et un jeu axial est prévu entre une seconde extrémité de l'axe et ledit élément de retenue de façon à ce que ce dernier ne soit pas sollicité axialement par l'axe sauf éventuellement en cas de rupture de l'axe ; du fait de ce jeu axial, l'axe n'est pas en appui sur l'élément de retenue en fonctionnement, et n'exerce donc pas de contraintes sur cet élément, ce qui est avantageux,
- une première douille comprenant l'élément d'appui est montée dans l'orifice de la première oreille et traversée par l'axe,
- l'élément d'appui est formé par un rebord annulaire externe à une extrémité de la première douille du côté de la rotule,
- en position de montage, un jeu axial est prévu entre la première oreille et l'élément d'appui,
- l'organe élastique est directement ou indirectement en appui axial sur une extrémité de la première douille,
- une seconde douille comprenant l'élément de retenue est montée dans l'orifice de la seconde oreille et traversée par l'axe, l'élément de retenue étant formé par un rebord annulaire interne de ladite seconde douille,
- la seconde douille comprend à une extrémité interne du côté de la rotule un rebord annulaire externe intercalé entre une face latérale interne de la seconde oreille et la rotule, et en ce que la rotule est sollicitée indirectement par ledit organe élastique pour appuyer axialement sur ledit rebord annulaire externe,
- l'organe élastique, tel qu'une rondelle Belleville, est monté serré axialement entre le couvercle et la première extrémité de l'axe pour solliciter axialement ce dernier dans une direction opposée au couvercle, ladite première extrémité de l'axe comprenant un rebord annulaire externe en appui axial sur une extrémité de la première douille du côté opposé à la rotule,
- la ou chaque douille est configurée pour être montée dans l'orifice de l'oreille correspondante, depuis l'espace intérieur s'étendant entre lesdites oreilles,
- le couvercle a une forme générale annulaire et comprend une partie périphérique externe qui s'étend autour de ladite extrémité de l'axe et qui est appliquée et fixée sur une face latérale externe de la première oreille, et
- le couvercle est fixé sur l'axe.

La présente invention concerne également une turbomachine, telle qu'un turboréacteur ou un turbopropulseur d'avion, caractérisée ce qu'elle est équipée d'au moins un dispositif tel que décrit ci-dessus.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés, dans lesquels :
- la figure 1 est une vue schématique en coupe axiale d'un mode de réalisation du dispositif d'articulation à rotule selon l'invention,
- la figure 2 est une vue schématique en coupe axiale du dispositif d'articulation à rotule de la figure 2, l'axe étant ici rompu,
- les figures 3 à 6 sont des vues schématiques en perspective du dispositif d'articulation à rotule de la figure 2, et
- la figure 7 est une vue schématique en coupe axiale d'un autre mode de réalisation du dispositif d'articulation à rotule selon l'invention.

### DESCRIPTION DETAILLEE

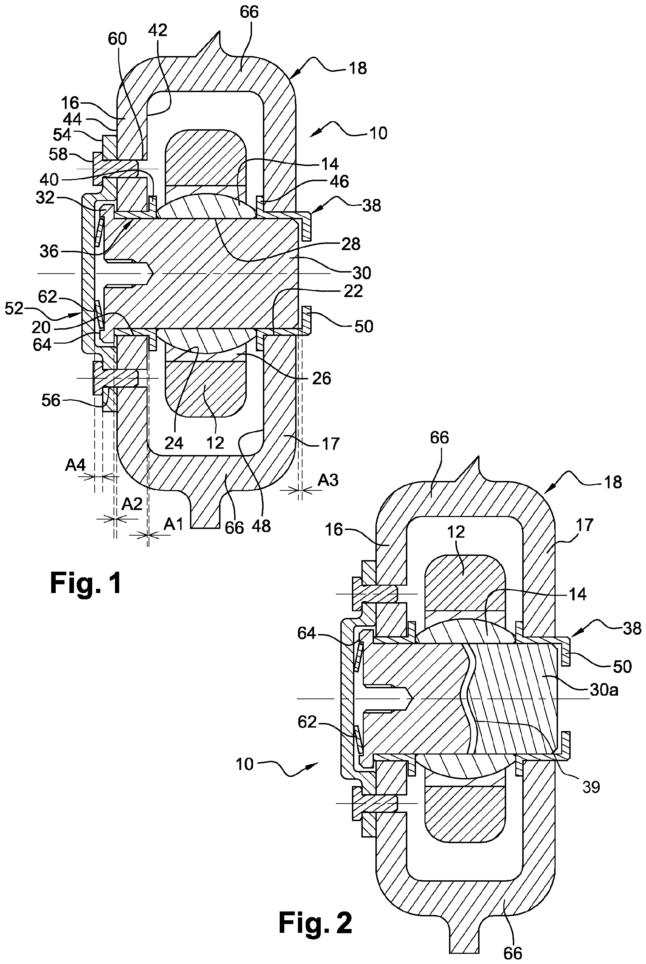

Les figures 1 à 6 représentent un premier mode de réalisation du dispositif 10 d'articulation à rotule selon l'invention. Ce dispositif 10 comporte une bielle 12 dont une extrémité porte une rotule 14 et est intercalée entre les deux oreilles 16, 17 d'une chape 18.

Dans le cas de la suspension d'une turbomachine à un pylône, la chape 18 est typiquement formée avec ou fixée sur un carter du moteur. La chape 18 est du type femelle et ses deux oreilles 16, 17 sont plates et parallèles entre elles, ces oreilles 16, 17 comportant des orifices 20, 22 coaxiaux et à parois internes cylindriques.

La bielle 12 est reliée à des moyens de suspension au pylône et son extrémité visible dans le dessin est plate et comprend un orifice 24 à paroi cylindrique interne de montage d'une cage 26 qui est sertie dans l'orifice et dont la paroi sphérique interne accueille la rotule 14 qui est libre de tourner dans la cage 26. La rotule 14 comprend un alésage cylindrique 28 traversé par un axe 30 à corps cylindrique dont les extrémités passent dans les orifices 20, 22 des oreilles 16, 17. L'axe 30 comprend à une première extrémité un rebord annulaire externe 32.

Dans l'exemple représenté, deux douilles 36, 38 sont montées respectivement dans les orifices 20, 22 des oreilles. Ces douilles 36, 38 sont coaxiales et comprennent chacune un corps cylindrique tubulaire.

Une première douille 36 est engagée dans l'orifice 20, depuis le côté interne de l'oreille 16, et comprend à son extrémité interne (située du côté de la rotule 14) un rebord annulaire externe 40 qui est en regard de la face latérale interne 42 de l'oreille 16 (et plus exactement qui s'étend en regard de la partie périphérique de la face 42 s'étendant autour de l'orifice 20).

Comme cela est visible en figure 1, en position de montage, le rebord 40 est séparé de la face 42 par un jeu axial A1. La première douille 36 prend appui par son rebord 40 sur la rotule 14. Le rebord 40 constitue donc un élément d'appui traversé par l'axe 30 et en appui axial sur la rotule. Cet élément d'appui 40 est ici formé avec la douille 36, mais on pourrait également avoir par exemple une douille 36 sans rebord annulaire externe, avec l'élément d'appui 40 formé par une rondelle annulaire intercalée axialement entre la douille 36 et la rotule 14. Par ailleurs, le rebord 32 de l'axe 30 est en appui axial sur l'extrémité externe (située du côté opposé à la rotule) de la douille 36 et est séparé de la face externe 44 de l'oreille par un jeu axial A2.

La seconde douille 38 est engagée dans l'orifice 22 depuis le côté interne de l'oreille 16, et comprend à son extrémité interne (située du côté de la rotule) un rebord annulaire externe 46 qui est en regard de la face latérale interne 48 de l'oreille (et plus exactement qui s'étend en regard de la partie périphérique de la face 48 s'étendant autour de l'orifice 22). Comme cela est visible en figure 1, en position de montage, le rebord 46 est en appui axial sur la face 48. La seconde douille 38 prend appui par son rebord 46 sur la rotule.

La seconde douille 38 comprend à son extrémité externe (située du côté opposé à la rotule) un rebord annulaire interne 50 de retenue axiale de l'axe 30, vers l'extérieur de l'oreille 18. Comme cela est visible en figure 1, en position de montage, le rebord 50 est séparé de l'axe 30 par un jeu axial A3, afin qu'il ne soit généré aucun appui axial entre l'axe 30 et la seconde douille 38. Un tel appui axial risquerait en effet de compromettre l'appui axial de l'axe 30 sur la première douille 36 et donc de compromettre le serrage de la rotule 14 entre les deux douilles. En cas de rupture de l'axe 30 (cf. figure 2), la partie 30a de l'axe s'étendant dans la seconde douille 38 peut prendre appui axialement sur le rebord 50 de cette douille 38 et être ainsi retenue et empêchée de se dissocier de l'oreille 17.

En figure 2, la rupture de l'axe 30 est désignée par la référence 39. De préférence, cette rupture a lieu à une position de l'axe 30 qui correspond sensiblement au milieu de l'alésage de la rotule selon la direction axiale, et de façon à ce que la surface de rupture s'étende autant que possible essentiellement dans la direction radiale par rapport à l'axe. Ainsi, les deux parties cassées de l'axe 30 continuent de maintenir la rotule. Pour cela, l'axe 30 peut comprendre, sensiblement en son milieu, une zone de relative faiblesse favorisant une rupture de l'axe dans cette zone plutôt qu'ailleurs, sans pour autant compromettre la solidité générale de l'axe. Cette zone de relative faiblesse peut être créée par une rainure annulaire périphérique sur l'axe, de profondeur suffisamment petite relativement au diamètre de l'axe pour conserver les performances mécaniques de celui-ci.

La douille 38 forme ainsi des moyens de retenue de l'axe 30, ces moyens étant portés par l'oreille 17, comme cela ressort clairement des dessins. Le dispositif 10 selon l'invention comprend d'autres moyens de retenue de l'axe 30, ces moyens étant portés par l'autre oreille 16 et comportant ici un couvercle 52 qui est rapporté et fixé sur l'oreille 16.

Dans l'exemple représenté, le couvercle 52 a une forme annulaire et recouvre l'extrémité de l'axe 30 comportant le rebord 32. Le couvercle 52 est disposé à l'extérieur de l'oreille 16 et sa périphérie externe 54 s'étend autour du rebord 32 de l'axe 30 et est appliquée et fixée sur la face externe 44 de l'oreille 16. Le couvercle 52 comprend ici à sa périphérie 54 quatre orifices 56 de passage de vis 58 qui sont directement vissées depuis l'extérieur dans des orifices 60 taraudés de l'oreille 16. Les vis 58 s'étendent ici sensiblement parallèlement à l'axe 30.

Un organe élastique 62 déformable en compression est monté serré axialement entre le couvercle 52 et l'extrémité de l'axe 30 comportant le rebord 32. Cet organe élastique 62 est précontraint une fois le couvercle 52 fixé sur l'oreille 16, et sollicite axialement l'axe 30 en direction du côté opposé au couvercle 52. Puisque le rebord 32 de l'axe 30 est en appui axial sur la première douille 36 grâce au jeu axial A2, l'organe élastique 62 sollicite axialement dans une direction opposée au couvercle l'élément d'appui 40 qui est en appui axial sur la rotule 14. L'organe élastique 62 est ici une rondelle Belleville dont la périphérie externe est en appui sur l'axe 30 et est entourée par un rebord cylindrique 64 de l'axe 30 qui sert à centrer la rondelle vis-à-vis de l'axe et à guider sa compression. En position de montage, l'axe 30 est donc séparé du couvercle 52 par un jeu axial A4 au niveau duquel s'étend l'organe élastique 62.

Dans ce premier mode de réalisation, le fait de disposer la rondelle 62 entre l'axe 30 et le couvercle 52 présente un avantage notable. En effet, la rondelle peut avoir plus ou moins le même diamètre que l'axe, une différence substantielle entre les deux diamètres étant toutefois possible, et en outre le jeu axial A4 peut être prévu plus ou moins grand en adaptant la dimension axiale du couvercle 52 à cet effet. Ainsi, en prenant une rondelle du commerce avec un diamètre plus ou moins proche du diamètre de l'axe 30, on adaptera le rebord cylindrique 64 à l'extrémité de l'axe en fonction du diamètre de la rondelle choisie et on prévoira un jeu axial A4 approprié pour tenir compte de la hauteur de la rondelle. On économise ainsi des coûts de développement qui seraient nécessaires s'il fallait imposer à la rondelle des dimensions spécifiques que l'on ne trouve pas dans les rondelles du commerce.

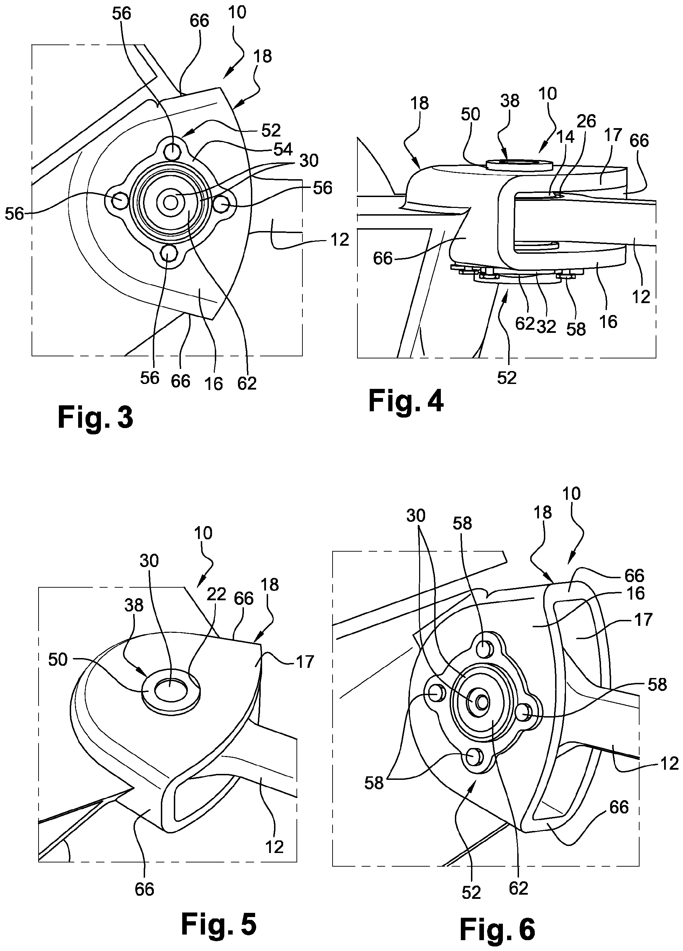

Comme cela est visible aux figures 3 à 6, les oreilles 16, 17 de la chape 18 sont reliées entre elles par des parois de rigidification 66 qui s'étendent sensiblement parallèlement à l'axe 30.

Le dispositif 10 selon l'invention peut être monté de la façon suivante. Les douilles 36, 38 sont montées dans les orifices 20, 22 des oreilles 16, 17 de la chape 18 depuis l'intérieur des oreilles, comme décrit dans ce qui précède. La rotule 14 portée par la bielle 12 est engagée entre les oreilles et disposée entre les douilles 36, 38 de façon à ce que son alésage 28 soit aligné avec les alésages des douilles. L'engagement de la rotule 14 est facilité par le jeu A1 qui permet au montage d'augmenter la distance inter-douilles 36, 38 d'une distance A1 au-delà de la dimension axiale de la rotule 14. Ce jeu A1 est donc le jeu axial de montage pouvant être ménagé entre la rotule et les deux éléments de maintien, ici les douilles 36 et 38, disposés axialement de part et d'autre de la rotule. L'axe 30 est ensuite engagé dans la douille 36, l'alésage de la rotule 14, puis la douille 38, jusqu'à ce que son rebord 32 vienne en appui sur la douille 36. L'organe élastique 62 est posé sur l'axe 30, puis le couvercle 52 est monté sur l'organe élastique 62 et est fixé à l'oreille 16 au moyen des vis 58. Le serrage des vis 58 provoque la compression de l'organe élastique 62 et le maintien en appui du rebord 32 de l'axe 30 sur la douille 36, ainsi que le serrage de la rotule 14 entre les douilles 36, 38. La raideur de l'organe élastique 62 est prévue suffisante pour qu'en fonctionnement la douille 36 reste axialement immobile sur l'axe 30. On dit alors que le jeu axial de montage de la rotule est supprimé en fonctionnement. Ce jeu est recréé lors d'un démontage du dispositif par exemple pour maintenance, dès lors que le couvercle 52 est démonté puisque le ressort 62 ne sollicite alors plus l'élément d'appui 40.

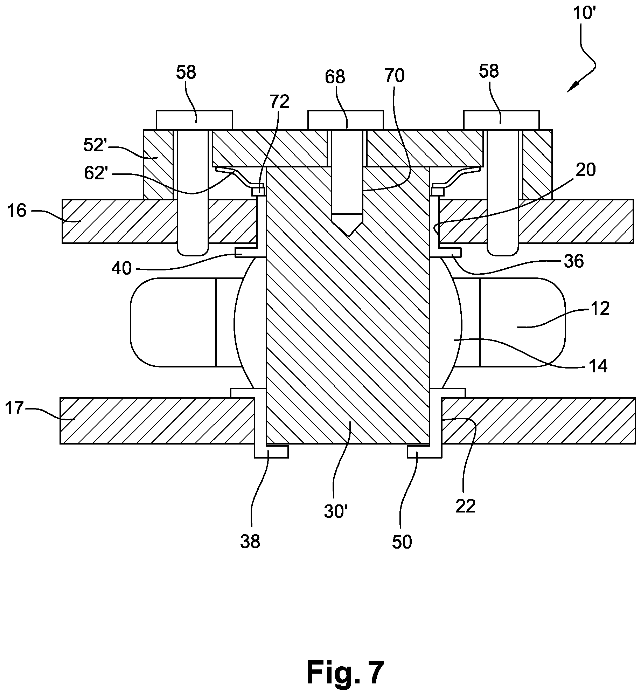

La figure 7 représente un autre mode de réalisation du dispositif 10' d'articulation à rotule selon l'invention. Les éléments du dispositif 10' déjà décrits dans ce qui précède en relation avec le dispositif 10 sont référencés par les mêmes chiffres dans la figure 7.

On constate que, dans ce mode de réalisation, les moyens de retenue axiale de l'axe 30', portés par l'oreille 17, comprennent une douille 38 identique à celle du premier mode de réalisation.

Les moyens de retenue portés par l'oreille 16 comprennent ici un couvercle 52' qui recouvre au moins en partie une extrémité de l'axe 30'. Le couvercle 52' est d'une part fixé à l'axe 30', ici par une vis 68 coaxiale à l'axe 30' et vissée dans un orifice taraudé 70 de l'extrémité de l'axe, et d'autre part à l'oreille 16, par des vis 58 similaires à celles décrites dans ce qui précède. En variante, le couvercle 52' pourrait être formé d'une seule pièce avec l'axe 30'.

Dans l'exemple représenté en figure 7, l'ensemble formé par le couvercle 52' et les vis 58 assure la retenue axiale de l'axe 30' du côté de l'oreille 16 opposé à la rotule 14. Dans la variante précitée, ce seraient les vis 58 uniquement qui assureraient la retenue axiale de l'axe 30' dans cette direction.

L'organe élastique 62' déformable en compression est ici monté serré axialement entre le couvercle 52' et la douille 36 montée dans l'orifice 20 de l'oreille 16. L'organe élastique 62' s'étend ici autour de l'axe 30'. L'organe élastique 62' sollicite axialement la douille 36 dans une direction opposée au couvercle 52'. L'élément d'appui 40 formé avec la douille 36 est donc sollicité par l'organe élastique 62' pour appuyer axialement sur la rotule 14. On notera que de même que dans le mode de réalisation précédent du dispositif 10, une distance axiale ménagée entre l'élément d'appui 40 et la surface intérieure de la première oreille 16, correspondant à la distance A1 précédente, permet de réaliser le jeu axial de montage de la rotule.

L'organe élastique 62' peut être directement en appui axial sur une extrémité de la douille 36. Au contraire, dans l'exemple représenté, l'organe élastique 62' est indirectement en appui axial sur cette extrémité de la douille 36 car un anneau 72 est intercalé entre l'organe élastique 62' et cette extrémité. Cet organe élastique 62' peut également être une rondelle Belleville.

L'organe élastique 62' est ici dimensionné pour que son diamètre intérieur soit très légèrement supérieur au diamètre de l'axe 30'.

Ce mode de réalisation permet de retirer l'ensemble comportant le couvercle 52', l'axe 30', et l'organe 62' avec l'anneau 72, en un seul bloc au démontage une fois que les vis 58 de fixation du couvercle 52' sont démontées de la chape.

## Revendications

1. Dispositif (10, 10') d'articulation à rotule pour la suspension d'une turbomachine à un pylône ou la suspension d'un équipement au corps d'une turbomachine, comprenant un premier organe (12) dont une extrémité porte une rotule (14) et est intercalée entre les deux oreilles (16, 17) d'un second organe (18), la rotule comportant un alésage (28) de passage d'un axe (30, 30') dont les extrémités traversent des orifices (20, 22) des oreilles, une première (16) des oreilles comprenant ou portant des premiers moyens (52, 58, 52') de retenue axiale de l'axe du côté opposé à la rotule, et une seconde (17) des oreilles comprenant ou portant des seconds moyens (38) de retenue axiale de l'axe du côté opposé à la rotule, **caractérisé en ce que** les premiers moyens de retenue axiale comprennent un couvercle (52, 52') fixé à la première oreille (16) et qui recouvre au moins en partie une première extrémité de l'axe (30, 30') ou est formé d'une seule pièce avec la première extrémité de l'axe, et **en ce que** le dispositif comprend en outre un organe élastique (62, 62') déformable en compression qui est maintenu par le couvercle, ledit organe élastique (62, 62') étant configuré pour solliciter axialement dans une direction opposée au couvercle un élément d'appui (40) traversé par l'axe, positionné entre le couvercle et la rotule, et en appui axial sur la rotule (14).

2. Dispositif (10, 10') selon la revendication 1, **caractérisé en ce que** les seconds moyens de retenue axiale comprennent un élément de retenue (50) disposé du côté de la seconde oreille (17) opposé à la rotule (14), et **en ce qu'**un jeu axial (A3) est prévu entre une seconde extrémité de l'axe (30, 30') et ledit élément de retenue (50) de façon à ce que ce dernier ne soit pas sollicité axialement par l'axe sauf éventuellement en cas de rupture de l'axe.

3. Dispositif (10, 10') selon la revendication 1 ou 2, **caractérisé en ce qu'**une première douille (36) comprenant l'élément d'appui (40) est montée dans l'orifice (20) de la première oreille (16) et traversée par l'axe.

4. Dispositif (10, 10') selon la revendication 3, **caractérisé en ce que** l'élément d'appui (40) est formé par un rebord annulaire externe à une extrémité de la première douille (36) du côté de la rotule (14).

5. Dispositif (10, 10') selon la revendication 3 ou 4, **caractérisé en ce que**, en position de montage, un jeu axial (A1) est prévu entre la première oreille (16) et l'élément d'appui (40).

6. Dispositif (10') selon l'une des revendications 3 à 5, **caractérisé en ce que** l'organe élastique (62') est directement ou indirectement en appui axial sur une extrémité de la première douille (36).

7. Dispositif (10, 10') selon l'une des revendications 3 à 6, **caractérisé en ce qu'**une seconde douille (38) comprenant l'élément de retenue (50) est montée dans l'orifice (22) de la seconde oreille (17) et traversée par l'axe (30, 30'), l'élément de retenue (50) étant formé par un rebord annulaire interne de ladite seconde douille (38).

8. Dispositif (10, 10') selon la revendication 7, **caractérisé en ce que** la seconde douille (38) comprend à une extrémité interne du côté de la rotule (14) un rebord annulaire externe (46) intercalé entre une face latérale interne (48) de la seconde oreille (17) et la rotule, et **en ce que** la rotule est sollicitée indirectement par ledit organe élastique (62, 62') pour appuyer axialement sur ledit rebord annulaire externe (46).

9. Dispositif (10) selon l'une des revendications 3 à 8, **caractérisé en ce que** l'organe élastique (62), tel qu'une rondelle Belleville, est monté serré axialement entre le couvercle (52) et la première extrémité de l'axe (30) pour solliciter axialement ce dernier dans une direction opposée au couvercle, ladite première extrémité de l'axe comprenant un rebord annulaire externe (32) en appui axial sur une extrémité de la première douille (36) du côté opposé à la rotule (14) .

10. Dispositif selon l'une des revendications 3 à 9, dans laquelle la ou chaque douille (36, 38) est configurée pour être montée dans l'orifice de l'oreille correspondante, depuis l'espace intérieur s'étendant entre lesdites oreilles.

11. Dispositif (10) selon l'une des revendications précédentes, **caractérisé en ce que** le couvercle (52) a une forme générale annulaire et comprend une partie périphérique externe (54) qui s'étend autour de ladite extrémité de l'axe (30, 30') et qui est appliquée et fixée sur une face latérale externe (44) de la première oreille (16).

12. Dispositif (10') selon l'une des revendications précédentes, **caractérisé en ce que** le couvercle (52') est fixé sur l'axe (30').

13. Turbomachine, telle qu'un turboréacteur ou un turbopropulseur d'avion, **caractérisée** ce qu'elle est équipée d'au moins un dispositif (10, 10') selon l'une des revendications précédentes.

## Patentansprüche

1. Kugelgelenkvorrichtung (10, 10') zum Aufhängen einer Turbomaschine an einem Pylon oder Aufhängen einer Vorrichtung am Körper einer Turbomaschine, umfassend ein erstes Glied (12), dessen eines Ende ein Kugelgelenk (14) trägt und zwischen den beiden Ohren (16, 17) eines zweiten Glieds (18) angeordnet ist, wobei das Kugelgelenk eine Bohrung (28) zum Durchführen einer Achse (30, 30') aufweist, deren Enden durch Öffnungen (20, 22) in den Ohren verlaufen, wobei ein erstes (16) der Ohren erste Mittel (52, 58, 52') zum axialen Halten der Achse auf der dem Kugelgelenk gegenüberliegenden Seite und ein zweites (17) der Ohren zweite Mittel (38) zum axialen Halten der Achse auf der dem Kugelgelenk gegenüberliegenden Seite umfasst oder trägt, **dadurch gekennzeichnet, dass** die ersten axialen Haltemittel eine Abdeckung (52, 52') umfassen, die an dem ersten Ohr (16) befestigt ist und die zumindest teilweise ein erstes Ende der Achse (30, 30') abdeckt oder einstückig mit dem ersten Ende der Achse ausgebildet ist, und dass die Vorrichtung ferner ein elastisches, druckverformbares Glied (62, 62') umfasst, das von der Abdeckung gehalten wird, wobei das elastische Glied (62, 62') so konfiguriert ist, dass es axial in einer der Abdeckung entgegengesetzten Richtung ein von der Achse durchquertes, zwischen der Abdeckung und dem Kugelgelenk angeordnetes Stützelement (40) und in axialer Abstützung auf dem Kugelgelenk (14) beaufschlagt.

2. Vorrichtung (10, 10') nach Anspruch 1, **dadurch gekennzeichnet, dass** die zweiten Mittel zum axialen Halten ein Halteelement (50) umfassen, das auf der dem Kugelgelenk (14) gegenüberliegenden Seite des zweiten Ohres (17) angeordnet ist, und dass ein Axialspiel (A3) zwischen einem zweiten Ende der Achse (30, 30') und dem Halteelement (50) vorgesehen ist, so dass dieses von der Achse nicht axial beaufschlagt wird, außer möglicherweise im Falle eines Bruchs der Achse.

3. Vorrichtung (10, 10') nach Anspruch 1 oder 2, **dadurch gekennzeichnet, dass** eine erste Hülse (36) mit dem Stützelement (40) in der Öffnung (20) des ersten Ohres (16) angebracht und von der Achse durchquert ist.

4. Vorrichtung (10, 10') nach Anspruch 3, **dadurch gekennzeichnet, dass** das Stützelement (40) durch einen äußeren Ringflansch an einem Ende der ersten Hülse (36) auf der Seite des Kugelgelenks (14) ausgebildet ist.

5. Vorrichtung (10, 10') nach Anspruch 3 oder 4, **dadurch gekennzeichnet, dass** zwischen dem ersten Ohr (16) und dem Stützelement (40) in Einbaulage ein Axialspiel (A1) vorgesehen ist.

6. Vorrichtung (10') nach einem der Ansprüche 3 bis 5, **dadurch gekennzeichnet, dass** das elastische Glied (62') direkt oder indirekt axial auf einem Ende der ersten Hülse (36) anliegt.

7. Vorrichtung (10, 10') nach einem der Ansprüche 3 bis 6, **dadurch gekennzeichnet, dass** eine zweite Hülse (38) mit dem Halteelement (50) in der Öffnung (22) des zweiten Ohres (17) angebracht und von der Achse (30, 30') durchquert ist, wobei das Halteelement (50) durch einen inneren Ringflansch der zweiten Hülse (38) ausgebildet ist.

8. Vorrichtung (10, 10') nach Anspruch 7, **dadurch gekennzeichnet, dass** die zweite Hülse (38) an einem inneren Ende auf der Seite des Kugelgelenks (14) einen äußeren Ringflansch (46) umfasst, der zwischen einer inneren Seitenfläche (48) des zweiten Ohrs (17) und dem Kugelgelenk angeordnet ist, und dass das Kugelgelenk durch das elastische Glied (62, 62') indirekt beaufschlagt wird, um axial gegen den äußeren Ringflansch (46) zu drücken.

9. Vorrichtung (10) nach einem der Ansprüche 3 bis 8, **dadurch gekennzeichnet, dass** das elastische Glied (62), wie eine Tellerfeder, axial zwischen der Abdeckung (52) und dem ersten Ende der Welle (30) eingespannt ist, um diese in einer Richtung gegenüber der Abdeckung axial zu beaufschlagen, wobei das erste Ende der Achse einen äußeren Ringflansch (32) umfasst, der axial an einem Ende der ersten Hülse (36) auf der Seite gegenüber dem Kugelgelenk (14) anliegt.

10. Vorrichtung nach einem der Ansprüche 3 bis 9, wobei die oder jede Hülse (36, 38) so konfiguriert ist, dass sie in der entsprechenden Ohröffnung aus dem sich zwischen den Ohren erstreckenden Innenraum angebracht wird.

11. Vorrichtung (10) nach einem der vorstehenden Ansprüche, **dadurch gekennzeichnet, dass** die Abdeckung (52) eine im Allgemeinen ringförmige Form hat und einen äußeren Umfangsteil (54) umfasst, der sich um das Ende der Achse (30, 30') erstreckt und der an einer äußeren Seitenfläche (44) des ersten Ohres (16) aufgebracht und befestigt ist.

12. Vorrichtung (10') nach einem der vorstehenden Ansprüche, **dadurch gekennzeichnet, dass** die Abdeckung (52') auf der Achse (30') befestigt ist.

13. Turbomaschine wie beispielsweise ein Turbostrahltriebwerk oder ein Turboproptriebwerk für ein Flugzeug, **dadurch gekennzeichnet, dass** sie mit mindestens einer Vorrichtung (10, 10') nach einem der vorstehenden Ansprüche ausgestattet ist.

## Claims

1. Ball joint device (10, 10') for suspending a turbine engine from a strut or suspending an item of equipment on the body of a turbine engine, comprising a first member (12), one end of which carries a ball joint (14) and is interposed between the two lugs (16, 17) of a second member (18), the ball joint comprising a bore (28) for the passage of a shaft (30, 30'), the ends of which shaft pass through openings (20, 22) in the lugs, a first (16) of the lugs comprising or carrying first means (52, 58, 52') for axially holding the shaft on the side opposite the ball joint, and a second (17) of the lugs comprising or carrying second means (38) for axially holding the shaft on the side opposite the ball joint, **characterised in that** the first axial holding means comprise a cover (52, 52') which is fixed to the first lug (16) and which covers a first end of the shaft (30, 30') at least in part, or which is formed in one piece with the first end of the shaft, and **in that** the device further comprises a resilient member (62, 62') that is deformable under compression and is held by the cover, said resilient member (62, 62') being designed to axially bias a support element (40), through which the shaft passes and which is in axial abutment on the ball joint (14), in a direction away from the cover, said support element being positioned between the cover and the ball joint.

2. Device (10, 10') according to claim 1, **characterised in that** the second axial holding means comprise a holding element (50) arranged on the side of the second lug (17) opposite the ball joint (14), and **in that** an axial clearance (A3) is provided between a second end of the shaft (30, 30') and said holding element (50) so that said element is not axially biased by the shaft except possibly in the event of fracture of the shaft.

3. Device (10, 10') according to either claim 1 or claim 2, **characterised in that** a first bushing (36) comprising the support element (40) is mounted in the opening (20) of the first lug (16) and has the shaft passing therethrough.

4. Device (10, 10') according to claim 3, **characterised in that** the support element (40) is formed by an external annular rim at one end of the first bushing (36) on the ball-joint (14) side.

5. Device (10, 10') according to either claim 3 or claim 4, **characterised in that**, in the mounting position, an axial clearance (A1) is provided between the first lug (16) and the support element (40).

6. Device (10') according to any of claims 3 to 5, **characterised in that** the resilient member (62') is directly or indirectly in axial abutment on one end of the first bushing (36).

7. Device (10, 10') according to any of claims 3 to 6, **characterised in that** a second bushing (38) comprising the holding element (50) is mounted in the opening (22) in the second lug (17) and has the shaft (30, 30') passing therethrough, the holding element (50) being formed by an internal annular rim of said second bushing (38).

8. Device (10, 10') according to claim 7, **characterised in that** the second bushing (38) comprises, at an internal end on the ball-joint (14) side, an external annular rim (46) that is interposed between an internal lateral face (48) of the second lug (17) and the ball joint, and **in that** the ball joint is biased indirectly by said resilient member (62, 62') in order to bear axially on said external annular rim (46).

9. Device (10) according to any of claims 3 to 8, **characterised in that** the resilient member (62), such as a Belleville washer, is mounted so as to be axially clamped between the cover (52) and the first end of the shaft (30) in order to axially bias said shaft in a direction away from the cover, said first end of the shaft comprising an external annular rim (32) that is in axial abutment on one end of the first bushing (36) on the side opposite the ball joint (14).

10. Device according to any of claims 3 to 9, wherein the or each bushing (36, 38) is designed to be mounted in the opening in the corresponding lug, from the internal space extending between said lugs.

11. Device (10) according to any of the preceding claims, **characterised in that** the cover (52) is approximately annular in shape and comprises an external peripheral portion (54) that extends around said end of the shaft (30, 30') and is applied and fixed to an external lateral face (44) of the first lug (16).

12. Device (10') according to any of the preceding claims, **characterised in that** the cover (52') is fixed to the shaft (30').

13. Turbine engine, such as an aeroplane turbojet engine or turboprop engine, **characterised in that** it is equipped with at least one device (10, 10') according to any of the preceding claims.
